# EUROPEAN PATENT APPLICATION

(11) **EP 4 592 352 A1**
(43) Date of publication of application: **30.07.2025**
(21) Application number: 24874868.3
(22) Date of filing: 02.09.2024
(51) Int. Cl.: C08L 67/02, C08L 23/08, C08K 5/5313, C08K 5/523, C08K 3/32, C08K 5/521, C08J 3/22

(54) **POLYBUTYLENE TEREPHTHALATE RESIN COMPOSITION, METHOD FOR PREPARING SAME, AND MOLDED PRODUCT COMPRISING SAME**

(30) Priority: 05.10.2023 KR 20230132314; 29.08.2024 KR 20240116556
(71) Applicant: LG CHEM, LTD., Seoul 07336 (KR)
(72) Inventor: PARK, Won Seok, Daejeon 34122 (KR); KWON, Tae Hun, Daejeon 34122 (KR); PARK, Jae Chan, Daejeon 34122 (KR); LEE, Ran Hee, Daejeon 34122 (KR)
(74) Representative: Goddar, Heinz J.
(86) International application number: PCT/KR2024/013122
(87) International publication number: WO 2025/075310

(57) **Abstract**

The present invention relates to a polybutylene terephthalate resin composition, a method of preparing the same, and a molded article including the same. The present invention has an effect of providing a polybutylene terephthalate resin composition suitable for electrical and electronic products or automobile parts due to excellent mechanical properties, processability, flame retardancy, and elongation despite containing a high content of polybutylene terephthalate, a method of preparing the polybutylene terephthalate resin composition, and a molded article including the polybutylene terephthalate resin composition.

## Description

### [Technical Field]

### [Cross-Reference to Related Applications]

This application claims priority to Korean Patent Application No. 10-2023-0132314, filed on October 05, 2023, and Korean Patent Application No. 10-2024-0116556, re-filed on August 29, 2024, based on the priority of the above patent, in the Korean Intellectual Property Office, the disclosures of each of which are incorporated herein by reference.

The present invention relates to a polybutylene terephthalate resin composition, a method of preparing the same, and a molded article including the same, and more particularly, to a polybutylene terephthalate resin composition useful for use in electrical and electronic products or automobile parts due to excellent mechanical properties, processability, flame retardancy, and elongation despite containing a high content of polybutylene terephthalate, a method of preparing the polybutylene terephthalate resin composition, and a molded article including the polybutylene terephthalate resin composition.

### [Background Art]

Recently, many studies have been conducted to resinify electrical and electronic products or automobile parts. In particular, polybutylene terephthalate (PBT) is attracting attention as a material for metal replacement parts in terms of economic efficiency and physical properties.

Polybutylene terephthalate (PBT) is a crystalline polymer that has advantages such as high heat resistance and short manufacturing time. However, PBT has poor compatibility with other resins or reinforcing agents such as glass fiber, and thus cannot exhibit additional properties such as flame retardancy and elongation.

In particular, electrical and electronic products or automobile parts must provide elongation, processability, impact stability, flame retardancy, and elongation even when exposed to harsh external environments, but it is difficult to meet these requirements with non-reinforced polybutylene terephthalate (PBT).

### [Related Art Documents]

### [Patent Documents]

European Patent Application Publication No. 4101883

### [Disclosure]

### [Technical Problem]

Therefore, the present invention has been made in view of the above problems, and it is one object of the present invention to provide a polybutylene terephthalate resin composition useful for use in electrical and electronic products or automobile parts due to excellent mechanical properties, processability, flame retardancy, and elongation despite containing a high content of polybutylene terephthalate, a method of preparing the polybutylene terephthalate resin composition, and a molded article including the polybutylene terephthalate resin composition.

The above and other objects can be accomplished by the present invention described below.

### [Technical Solution]

I) In accordance with one aspect of the present invention, provided is a polybutylene terephthalate resin composition including 100 parts by weight of a polybutylene terephthalate; 1 to 30 parts by weight of an organometallic salt-based phosphinate flame retardant; 1 to 30 parts by weight of a phosphate-based flame retardant; and 1 to 30 parts by weight of a polyester-based elastomer or ethylene-glycidyl (meth)acrylate copolymer,
   wherein, when a content of the organometallic salt-based phosphinate flame retardant is a, a content of the phosphate-based flame retardant is b, and a content of the polyester-based elastomer or ethylene-glycidyl (meth)acrylate copolymer is c, a>b>c is satisfied;
   a weight ratio (a:b) of the organometallic salt-based phosphinate flame retardant to the phosphate-based flame retardant is 7:2 to 7:4; and
   a weight ratio (b:c) of the phosphate-based flame retardant to the polyester-based elastomer or ethylene-glycidyl (meth)acrylate copolymer is 4:3 to 8:3.
II) According to I), the polybutylene terephthalate may include a polybutylene terephthalate having an intrinsic viscosity (I.V) of greater than 1.1 and 1.5 or less and a polybutylene terephthalate having an intrinsic viscosity (I.V) of greater than 0.8 and 1.1 or less in a weight ratio of 1:0 to 1:1.
III) According to I) or II), the organometallic salt-based phosphinate flame retardant may have a structure represented by Chemical Formula 1 below.

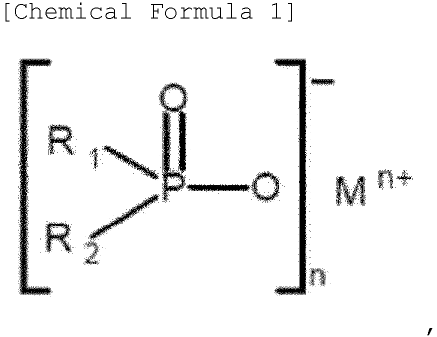

   wherein R1 and R2 are each an alkyl group or aryl group having 1 to 6 carbon atoms, M includes one or more selected from the group consisting of Mg, Ca, Al, Sb, Sn, Ge, Ti, Fe, Zr, Ce, Bi, Sr, Mn, Li, Na, K, and a protonated nitrogen base, and n is 1 to 4.
IV) According to I) to III), as a specific example, the organometallic salt-based phosphinate flame retardant may have a structure represented by Chemical Formula 1-1 below. 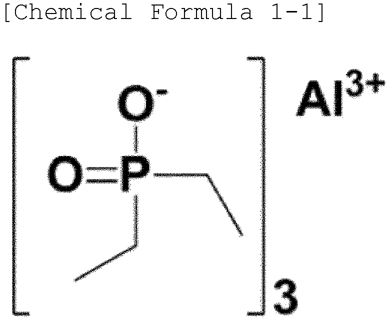
V) According to I) to IV), the phosphate-based flame retardant may have a structure represented by Chemical Formula 2 below.

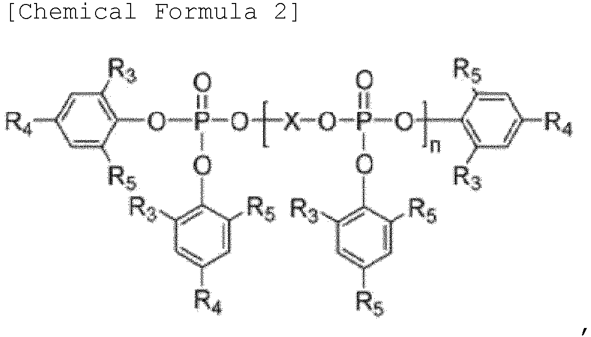

   wherein R3, R4, and R5 are each independently hydrogen or a C1-C4 alkyl group, X is a C6-C20 aryl group or a C6-C20 arylene group substituted with a C1-C4 alkyl group, and n is an integer from 0 to 4.
VI) According to I) to V), the phosphate-based flame retardant may be resorcinol bis(2,6-dimethylphenyl) phosphate.
VII) According to I) to VI), the polyester-based elastomer may be a compound composed of terephthalate as an aromatic dicarboxylic acid, 1,4-butanediol as an aliphatic diol, and polyoxytetramethylene glycol as an aliphatic polyether compound.
VIII) According to I) to VII), the ethylene-glycidyl (meth)acrylate copolymer may be a polyethylene-based copolymer obtained by polymerizing glycidyl (meth)acrylate.
IX) According to I) to VIII), the ethylene-glycidyl (meth)acrylate copolymer may be obtained by copolymerizing an olefin monomer and a monomer containing an epoxy group.
X) According to I) to IX), the ethylene-glycidyl (meth)acrylate copolymer may be obtained by polymerizing ethylene, glycidyl (meth)acrylate, and vinyl acetate.
XI) In accordance with another aspect of the present invention, provided is a polybutylene terephthalate resin composition including, based on 100 % by weight in total of a polybutylene terephthalate; an organometallic salt-based phosphinate flame retardant; a phosphate-based flame retardant; a polyester-based elastomer or ethylene-glycidyl (meth) acrylate copolymer; and an additive, 30 to 85 % by weight of a polybutylene terephthalate having an intrinsic viscosity (I.V) of greater than 1.1 and 1.5 or less, 0 to 40 % by weight of a polybutylene terephthalate having an intrinsic viscosity (I.V) of greater than 0.8 and 1.1 or less, 10 to 20 % by weight of the organometallic salt-based phosphinate flame retardant, 1 to 10 % by weight of the phosphate-based flame retardant, and 1 to 5 % by weight of the polyester-based elastomer or ethylene-glycidyl (meth)acrylate copolymer.
XII) According to XI), the additive may include one or more selected from the group consisting of a heat stabilizer, a flame retardant, a flame retardant auxiliary, an activator, a processing aid, a plasticizer, a coupling agent, a light stabilizer, a release agent, a dispersant, an anti-drip agent, a weather stabilizer, an antioxidant, a compatibilizer, a pigment, a dye, an antistatic agent, a wear resistance agent, a filler, and an antibacterial agent.
XIII) According to XI) to XII), the polybutylene terephthalate resin composition may be a non-reinforced material.
XIV) According to XI) to XIII), the polybutylene terephthalate resin composition may be a material used in parts for automobile electric/electronic equipment.
XV) According to XI) to XIV), the polybutylene terephthalate resin composition may have an elongation of 22 % or more as measured at a rate of 50 mm/min according to ISO 527.
XVI) According to XI) to XV), the polybutylene terephthalate resin composition may have an Izod impact strength (23 °C, notched) of 4.7 kJ/m² or more as measured using a 4 mm thick specimen according to ISO 180.
XVII) According to XI) to XVI), the polybutylene terephthalate resin composition may have a flame retardancy of V0 or higher as measured for a specimen size of 0.8 mm according to a UL94 method.
XVIII) In accordance with still another aspect of the present invention, provided is a method of preparing a polybutylene terephthalate resin composition, the method including adding, based on 100 % by weight in total of a polybutylene terephthalate; an organometallic salt-based phosphinate flame retardant; a phosphate-based flame retardant; a polyester-based elastomer or ethylene-glycidyl (meth) acrylate copolymer; and an additive, 30 to 85 % by weight of a polybutylene terephthalate having an intrinsic viscosity (I.V) of greater than 1.1 and 1.5 or less, 0 to 40 % by weight of a polybutylene terephthalate having an intrinsic viscosity (I.V) of greater than 0.8 and 1.1 or less, 10 to 20 % by weight of the organometallic salt-based phosphinate flame retardant, 1 to 10 % by weight of the phosphate-based flame retardant, and 1 to 5 % by weight of the polyester-based elastomer or ethylene-glycidyl (meth)acrylate copolymer into an extruder and performing melt-kneading and extrusion,
   wherein, when a content of the organometallic salt-based phosphinate flame retardant is a, a content of the phosphate-based flame retardant is b, and a content of the polyester-based elastomer or ethylene-glycidyl (meth)acrylate copolymer is c, a>b>c is satisfied;
   a weight ratio (a:b) of the organometallic salt-based phosphinate flame retardant to the phosphate-based flame retardant is 7:2 to 7:4; and
   a weight ratio (b:c) of the phosphate-based flame retardant to the polyester-based elastomer or ethylene-glycidyl (meth)acrylate copolymer is 4:3 to 8:3.
XIX) In accordance with yet another aspect of the present invention, provided is a molded article including the above-described polybutylene terephthalate resin composition.
XX) According to XIX), the molded article may be an automobile part or an electrical and electronic part.
XXI) According to XIX) or XX), the molded article may be a part for automobile electric/electronic equipment.
XXII) According to XIX) to XXI), the part for automobile electric/electronic equipment may include a connector part or a sensor part.
XXIII) According to XIX) to XXII), the connector part may include a connector for TV.

### [Advantageous Effects]

According to the present invention, the present invention has an effect of providing a polybutylene terephthalate resin composition having excellent mechanical properties, processability, flame retardancy, and elongation despite containing a high content of polybutylene terephthalate.

Therefore, the polybutylene terephthalate resin composition according to the present invention can be used as a material for automobile electric/electronic equipment including connectors, sensors, and parking brake systems that require the physical properties thereof.

### [Best Mode]

Hereinafter, a polybutylene terephthalate resin composition of the present invention, a method of preparing the same, and a molded article including the same will be described in detail.

In this description, a polymer including a certain compound means a polymer prepared by polymerizing the compound, and a unit in the polymer is derived from the compound. In this description, a polymer including a compound means a polymer obtained by polymerizing the compound, and the units in the polymerized polymer are derived from the compound.

In this description, the composition ratio of a (co)polymer may mean the content of a unit constituting the (co)polymer, or may mean the content of a unit introduced during polymerization of the (co)polymer.

In this description, unless otherwise defined, "content" means weight and "%" means % by weight.

The present inventors confirmed that, when including polybutylene terephthalate having an intrinsic viscosity (I.V) of greater than 1.1 and 1.5 or less in a high content and an organometallic salt-based phosphinate flame retardant, a phosphate-based flame retardant, and a polyester-based elastomer or an ethylene-glycidyl (meth)acrylate copolymer in a predetermined content, mechanical properties, processability, flame retardancy, and elongation were excellent. Based on these results, the present inventors conducted further studies to complete the present invention.

For example, a polybutylene terephthalate resin composition of the present invention includes 100 parts by weight of a polybutylene terephthalate; 1 to 30 parts by weight of an organometallic salt-based phosphinate flame retardant; 1 to 30 parts by weight of a phosphate-based flame retardant; and 1 to 30 parts by weight of a polyester-based elastomer or ethylene-glycidyl (meth)acrylate copolymer and does not include reinforcing fiber and polyethylene terephthalate. In this case, despite containing a high content of polybutylene terephthalate, mechanical properties, processability, flame retardancy, and elongation may be excellent, and the physical property balance may be realized.

Hereinafter, each component constituting the polybutylene terephthalate resin composition of the present invention is described in detail as follows.

### Polybutylene terephthalate

The polybutylene terephthalate used in the present invention may be a non-reinforced material.

As a specific example, the polybutylene terephthalate may include a polybutylene terephthalate (first polybutylene terephthalate) having an intrinsic viscosity (I.V) of greater than 1.1 and 1.5 or less and a polybutylene terephthalate (second polybutylene terephthalate) having an intrinsic viscosity (I.V) of greater than 0.8 and 1.1 or less in a weight ratio of 1:0 to 1:1. Within this range, mechanical strength and elongation may be excellent.

### First polybutylene terephthalate

In the present invention, the first polybutylene terephthalate may be a polybutylene terephthalate having an intrinsic viscosity (I.V) of greater than 1.1 and 1.5 or less.

For example, the first polybutylene terephthalate is not specifically limited as long as the first polybutylene terephthalate follows the definition of the present invention. For example, the first polybutylene terephthalate may be a polybutylene terephthalate that has not undergone a molding process such as injection after polymerizing monomers constituting the polybutylene terephthalate, or an equivalent available polybutylene terephthalate.

For example, the first polybutylene terephthalate may be referred to as a first (virgin) polybutylene terephthalate, a new polybutylene terephthalate, a fresh polybutylene terephthalate, or a non-recycled polybutylene terephthalate.

For example, the first polybutylene terephthalate of the present invention may have an intrinsic viscosity (I.V) of greater than 1.1 and 1.5 or less, preferably 1.15 to 1.5, more preferably 1.15 to 1.3. In this case, elongation and melt flow index may be optimized.

In the present disclosure, when intrinsic viscosity is measured, unless noted otherwise, a sample solution with a concentration of 0.05 g/ml is prepared by completely dissolving a sample in methylene chloride as a solvent, and then is filtered using a filter to obtain a filtrate. Then, using the obtained filtrate, intrinsic viscosity is measured at 20 °C using a Ubbelohde viscometer.

For example, the first polybutylene terephthalate may have a polydispersity index of 2.75 or less, preferably 2.6 or less, more preferably 2.5 or less, still more preferably 2.0 to 2.5. Within this range, the physical property balance between elongation and melt flow index may be satisfied.

In the present invention, the polydispersity index means the distribution of molecular weight and is a value calculated by dividing the weight average molecular weight by the number average molecular weight. A high polydispersity index means that the standard deviation of the molecular weight distribution is large, meaning that there are more molecules larger or smaller than the weight average molecular weight.

In the present invention, unless otherwise defined, the weight average molecular weight and the number average molecular weight may be measured using gel permeation chromatography (GPC, Waters Breeze). As a specific example, the weight average molecular weight and the number average molecular weight may be measured using tetrahydrofuran (THF) as an eluate through gel permeation chromatography (GPC, Waters Breeze). In this case, the weight average molecular weight and the number average molecular weight are obtained as a relative value to a polystyrene (PS) standard sample. As a specific measurement example, the weight average molecular weight and the number average molecular weight may be measured under conditions of solvent: THF, column temperature: 40 °C, flow rate: 0.3 ml/min, sample concentration: 20 mg/ml, injection amount: 5 µl, column model: 1× PLgel 10 µm MiniMix-B (250 × 4.6 mm) + 1× PLgel 10 µm MiniMix-B (250 × 4.6 mm) + 1× PLgel 10 µm MiniMix-B Guard (50 × 4.6 mm), equipment name: Agilent 1200 series system, refractive index detector: Agilent G1362 RID, RI temperature: 35 °C, data processing: Agilent ChemStation S/W, and test method (Mn, Mw and PDI): OECD TG 118.

For example, the first polybutylene terephthalate may have a weight average molecular weight of 28,000 g/mol or more, preferably 29,000 g/mol or more, more preferably 30,000 g/mol or more, still more preferably 30,000 to 37,000 g/mol. Within this range, mechanical properties and physical property balance may be excellent.

Polybutylene terephthalate (PBT) is not particularly limited and may be manufactured and used through a method known in the art, or a commercially available material may be used.

For example, based on 100 % by weight in total of the polybutylene terephthalate having an intrinsic viscosity (I.V) of greater than 1.1 and 1.5 or less, the metal salt of phosphinic acid, the non-halogen phosphate-based flame retardant, the polyester-based elastomer or ethylene-glycidyl (meth)acrylate copolymer, and the additive, the polybutylene terephthalate having an intrinsic viscosity (I.V) of greater than 1.1 and 1.5 or less may be included in an amount of 30 to 85 % by weight, as a specific example, 30 to 80 % by weight, preferably 35 to 80 % by weight. In this case, the physical property balance between elongation and melt flow index may be satisfied.

For example, the first polybutylene terephthalate may be included in an amount of 25 to 75 % by weight, preferably 25 to 70 % by weight, more preferably 30 to 70 % by weight in a polybutylene terephthalate-based resin. Within this range, impact resistance and heat resistance may be excellent.

For example, the first polybutylene terephthalate may be a resin obtained by polymerizing an aromatic diol compound and a carbonate precursor.

For example, the aromatic diol compound may include one or more selected from the group consisting of bis(4-hydroxyphenyl) methane, bis(4-hydroxyphenyl)ether, bis(4-hydroxyphenyl) sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A; BPA), 2,2-bis(4-hydroxyphenyl)butane, 1,1-bis(4-hydroxyphenyl)cyclohexane (bisphenol Z; BPZ), 2,2-bis(4-hydroxy-3,5-dibromophenyl)propane, 2,2-bis(4-hydroxy-3,5-dichlorophenyl)propane, 2,2-bis(4-hydroxy-3-bromophenyl)propane, 2,2-bis(4-hydroxy-3chlorophenyl)propane, 2,2-bis(4-hydroxy-3-methylphenyl)propane, 2,2-bis(4-hydroxy-3,5-dimethylphenyl)propane, 1,1-bis(4-hydroxyphenyl)-1-phenylethane, bis(4-hydroxyphenyl)diphenylmethane, and α,ω-bis[3-(o-hydroxyphenyl)propyl]polydimethylsiloxane, preferably bisphenol A.

For example, the carbonate precursor may include one or more selected from the group consisting of dimethyl carbonate, diethyl carbonate, dibutyl carbonate, dicyclohexyl carbonate, diphenyl carbonate, dithoryl carbonate, bis(chlorophenyl) carbonate, m-cresyl carbonate, dinaphthyl carbonate, bis(diphenyl) carbonate, carbonyl chloride (phosgene), triphosgene, diphosgene, carbonyl bromide, and bishaloformate. In terms of manufacturing efficiency and physical properties, triphosgene, phosgene, or a mixture thereof may be preferably used.

As a specific example, the polybutylene terephthalate obtained by polymerizing an aromatic diol compound and a carbonate precursor includes a repeat unit represented by Chemical Formula 3 below.

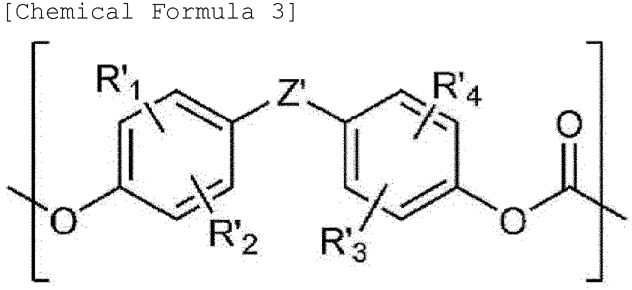

In Chemical Formula 3, R'₁ to R'₄ are each independently hydrogen, a C₁₋₁₀ alkyl group, a C₁₋₁₀ alkoxy group, or a halogen, and Z' is a C₁₋₁₀ alkylene group which is unsubstituted or substituted with a C₁₋₆ alkyl group or a C₆₋₂₀ aryl group, a C₃₋₁₅ cycloalkylene group which is unsubstituted or substituted with a C₁₋₁₀ alkyl group, O, S, SO, SO₂, or CO.

Preferably, in Chemical Formula 3, R'₁ to R'₄ are each independently hydrogen or a C₁₋₃ alkyl group, and Z' is a C₁₋₆ alkylene group which is unsubstituted or substituted with a methyl group or a phenyl group.

### Second polybutylene terephthalate

In the present invention, the second polybutylene terephthalate may have an intrinsic viscosity (I.V) of greater than 0.8 and 1.1 or less, preferably 0.85 to 1.1, more preferably 0.9 to 1.1. In this case, the physical property balance between elongation and melt flow index may be satisfied.

For example, the second polybutylene terephthalate may have a polydispersity index of greater than 2.75, preferably 2.8 or more, more preferably 2.8 to 3. Within this range, mechanical properties and physical property balance may be excellent.

For example, the second polybutylene terephthalate may have a weight average molecular weight of 20,000 g/mol or more and less than 28,000 g/mol, preferably 22,000 to 27,000 g/mol, more preferably 23,000 to 27,000 g/mol. Within this range, mechanical properties and physical property balance may be excellent.

The second polybutylene terephthalate is known to have lower properties in all aspects, such as impact resistance, heat resistance, and elongation, compared to the first polybutylene terephthalate, and was therefore used in a small amount, less than 25 % by weight, in the polybutylene terephthalate resin composition. However, the polybutylene terephthalate resin composition according to the present invention exhibits excellent mechanical properties, processability, flame retardancy, and elongation, despite containing the second polybutylene terephthalate in an excess of 20 % by weight or more, preferably 23 % by weight or more.

The monomers forming the second polybutylene terephthalate may preferably be selected within the same range as mentioned for the first polybutylene terephthalate.

For example, the second polybutylene terephthalate may be a commercially available product as long as the product complies with the definition of the present invention.

### Organometallic salt-based phosphinate flame retardant

The organometallic salt-based phosphinate flame retardant is added to increase the flame retardancy of the resin composition, and may have a structure represented by Chemical Formula 1 below.

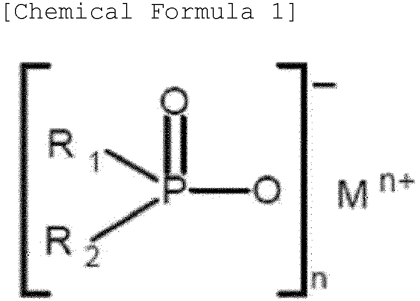

In Chemical Formula 1, R1 and R2 are each an alkyl group or aryl group having 1 to 6 carbon atoms, M includes one or more selected from the group consisting of Mg, Ca, Al, Sb, Sn, Ge, Ti, Fe, Zr, Ce, Bi, Sr, Mn, Li, Na, K, and a protonated nitrogen base, and n is 1 to 4.

As a specific example, the organometallic salt-based phosphinate flame retardant may have a structure represented by Chemical Formula 1-1 below.

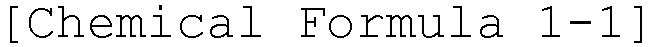

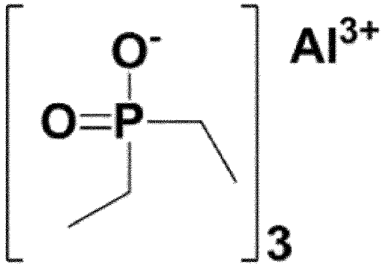

For example, based on 100 % by weight in total of all components constituting the polybutylene terephthalate resin composition, including the first polybutylene terephthalate, the second polybutylene terephthalate, the organometallic salt-based phosphinate flame retardant, the phosphate-based flame retardant, the polyester-based elastomer or ethylene-glycidyl (meth)acrylate copolymer, and the additive, the organometallic salt-based phosphinate flame retardant may be included in an amount of 10 to 20 % by weight, as a preferred example, 13 to 20 % by weight, as a more preferred example, 13 to 18 % by weight. When the content is out of this range, elongation and flame retardancy may be reduced, and unevenness may occur on the surface of an injection product manufactured using a polybutylene terephthalate resin composition containing the organometallic salt-based phosphinate flame retardant, resulting in deterioration in appearance quality.

### Phosphate-based flame retardant

The phosphate-based flame retardant is added to increase the flame retardancy of the resin composition by the first additive described above, and may have a structure represented by Chemical Formula 2 below.

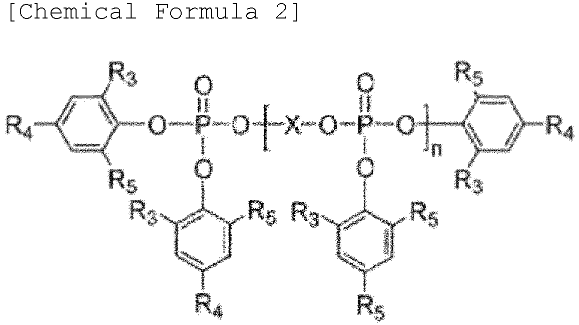

In Chemical Formula 2, R3, R4, and R5 are the same or different and are hydrogen or a C1-C4 alkyl group, X is a C6-C20 aryl group or a C6-C20 aryl group substituted with a C1-C4 alkyl group, and n is an integer from 0 to 4.

X may preferably be derived from a dialcohol such as resorcinol, hydroquinol or bisphenol A.

When n is 0, triphenylphosphate, tricresylphosphate, trixylenyl phosphate, tri(2,6-dimethylphenyl)phosphate, tri(2,4,6-trimethylphenyl)phosphate, tri(2,4-ditertiarybutylphenyl)phosphate, and tri(2,6-ditertiary butylphenyl)phosphate may be included.

When n is 1, resorcinol bis(diphenyl)phosphate, resorcinol bis(2,6-dimethyl phenyl) phosphate, resorcinol bis(2,4-ditertiarybutylphenyl)phosphate, hydroquinol bis(2,6-dimethylphenyl) phosphate, and hydroquinol bis(2,4-ditertiarybutylphenyl)phosphate may be included.

The phosphate-based flame retardants may be used alone or in mixtures.

Preferably, the phosphate-based flame retardant may be resorcinol bis(2,6-dimethylphenyl)phosphate.

The weight ratio of the organometallic salt-based phosphinate flame retardant to the phosphate-based flame retardant may be 1:0.2 to 1:0.9, or 1:0.2 to 1:0.6. In this case, a synergistic effect of flame retardancy may be provided without affecting other properties.

For example, based on 100 % by weight in total of all components constituting the polybutylene terephthalate resin composition, including the first polybutylene terephthalate, the second polybutylene terephthalate, the organometallic salt-based phosphinate flame retardant, the phosphate-based flame retardant, the polyester-based elastomer or ethylene-glycidyl (meth)acrylate copolymer, and the additive, the phosphate-based flame retardant may be included in an amount of 1 to 10 % by weight, as a preferred example, 2 to 10 % by weight, as a more preferred example, 3 to 9 % by weight. When the content is out of this range, elongation and flame retardancy may be reduced, and unevenness may occur on the surface of an injection product manufactured using a polybutylene terephthalate resin composition containing the phosphate-based flame retardant, resulting in deterioration in appearance quality.

### Polyester-based elastomer

One of the polyester-based elastomer of the present invention and the ethylene-glycidyl (meth)acrylate copolymer described below may be selected and used for impact reinforcement of the resin composition.

The polyester-based elastomer may include an aromatic dicarboxylic acid-derived unit or a unit derived from an ester-forming derivative thereof, an aliphatic diol-derived unit, and a polyalkylene oxide-derived unit.

The aromatic dicarboxylic acid-derived unit may include one or more selected from the group consisting of terephthalic acid, isophthalic acid, 2,6-naphthalene dicarboxylic acid, 1,5-naphthalene dicarboxylic acid, and 1,4-cyclohexane dicarboxylic acid.

The ester-forming derivative of the aromatic dicarboxylic acid may be a unit derived from one or more selected from the group consisting of dimethyl terephthalate, dimethyl isophthalate, 2,6-dimethyl naphthalene dicarboxylate, and dimethyl 1,4-cyclohexane dicarboxylate, preferably a unit derived from dimethyl terephthalate.

Based on a total weight of the polyester-based elastomer, the aromatic dicarboxylic acid-derived unit or the unit derived from the ester-forming derivative thereof may be included in an amount of 25 to 65 % by weight or 30 to 60 % by weight, preferably 30 to 60 % by weight.

The aliphatic diol-derived unit may have a weight average molecular weight of 300 g/mol or less, and may be a unit derived from an aliphatic diol.

The aliphatic diol-derived unit may be a unit derived from one or more selected from the group consisting of ethylene glycol, propylene glycol, 1,2-propanediol, 1,3-propanediol, 1,4-butanediol, 1,5-pentadiol, 1,6-hexanediol, and 1,4-cyclohexanedimethanol, preferably a unit derived from 1,4-butanediol.

Based on a total weight of the polyester-based elastomer, the aliphatic diol-derived unit may be included in an amount of 20 to 45 % by weight or 25 to 40 % by weight, preferably 25 to 40 % by weight.

The polyalkylene oxide-derived unit is an aliphatic polyether, which may act as a soft segment in the polyester-based elastomer.

The polyalkylene oxide-derived unit may be a unit derived from one or more selected from the group consisting of polyethylene glycol, polypropylene glycol, polytetramethylene glycol, polyhexamethylene glycol, a copolymer of ethylene oxide and propylene oxide, an ethyleneoxide addition polymer of polypropylene glycol, and a copolymer of ethylene oxide and tetrahydrofuran, preferably a unit derived from polytetramethylene glycol or an ethyleneoxide addition polymer of polypropylene glycol.

The polytetramethylene glycol may have a number average molecular weight of 600 to 3,000g/mol, 1,000 to 2,500 g/mol or 1,800 to 2,200 g/mol, preferably 1,800 to 2,200 g/mol.

The ethyleneoxide addition polymer of polypropylene glycol may be polypropylene glycol having terminals capped with ethylene oxide, and may have a weight average molecular weight of 2,000 to 3,000g/mol.

Based on a total weight of the thermoplastic polyester-based elastomer, the polyalkylene oxide-derived unit may be included in an amount of 10 to 50 % by weight or 15 to 45 % by weight. Within this range, the flexibility, heat resistance, and compatibility of the polyester-based elastomer may be further improved.

In addition, the polyester-based elastomer may have a weight average molecular weight of 2,000 to 3,000 g/mol.

The polyester-based elastomer may have a Shore D hardness of 35 to 55 D or 40 to 50 D. Within this range, the extrusion processing and molding of the polybutylene terephthalate resin composition may be facilitated, and the chemical resistance may be improved.

The polyester-based elastomer may have a melt index of 0.1 to 10 g/min or 1 to 10 g/min when a weight is measured at a temperature of 230 °C under a load of 2.16 kg for 10 minutes according to ASTM D1238. Within this range, the extrusion processing and molding of the polybutylene terephthalate resin composition may be facilitated, and the chemical resistance may be improved.

In addition, the polyester-based elastomer may be prepared by a method including step ( 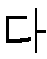 ) of preparing a polyester-based elastomer precursor by melt-polymerizing an aromatic dicarboxylic acid or an ester-forming derivative thereof, an aliphatic diol, and a polyalkylene oxide; and step ( 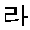 ) of preparing a polyester-based elastomer by solid-phase polymerization of a poly ester-based elastomer precursor.

Hereinafter, each step of the method of preparing the polyester-based elastomer is described in detail.

Step ( 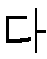 ) of preparing a polyester-based elastomer precursor

First, an aromatic dicarboxylic acid or an ester-forming derivative thereof, an aliphatic diol, and polyalkylene oxide are prepared as starting materials.

Based on a total weigh of the starting materials, the aromatic dicarboxylic acid or the ester-forming derivative thereof may be added in an amount of 25 to 65 % by weight or 30 to 60 % by weight, preferably 30 to 60 % by weight. Within this range, the reaction balance is excellent, so melt polymerization may be performed smoothly.

Specific examples of the aromatic dicarboxylic acid or ester-forming derivative thereof are as described above.

Based on a total weigh of the starting materials, the aliphatic diol may be added in an amount of 20 to 45 % by weight, 25 to 40 % by weight. Within this range, the reaction balance is excellent, so melt polymerization may be performed smoothly.

Specific examples of the aliphatic diol are as described above.

Based on a total weigh of the starting materials, the polyalkylene oxide may be added in an amount of 10 to 50 % by weight or 15 to 45 % by weight, preferably 15 to 45 % by weight. Within this range, the flexibility, heat resistance, and compatibility of the polyester-based elastomer may be further improved.

Specific examples of the polyalkylene oxide are as described above.

Next, a catalyst is first added to the starting materials, and melt polymerization is initiated after the temperature is increased to 140 to 215 °C.

The catalyst may be titanium butoxide.

When the melt polymerization is initiated, a transesterification reaction may occur between the starting materials, resulting in the production of oligomers, preferably bis(4-hydroxy butyl)terephthalate (BHBT) oligomers.

The transesterification reaction may be performed for 1 to 3 hours or 1 hour 30 minutes to 2 hours 30 minutes.

Next, after the catalyst is added to the oligomers for the second time, the temperature is increased to 215 to 245 °C, and then the polycondensation reaction may be performed while reducing the pressure from 760 torr to 0.3 torr. A polyester-based elastomer precursor may be produced by the polycondensation reaction.

The polycondensation reaction may be performed for 1 to 3 hours or 1 hour 30 minutes to 2 hours 30 minutes.

The polyester-based elastomer precursor may have a melt index of 15 to 25 g/min or 18 to 22 g/min when a weight is measured at a temperature of 230 °C under a load of 2.16 kg for 10 minutes according to ASTM D1238.

Next, the polyester-based elastomer precursor may be extruded in a strand shape under nitrogen pressure and pelletized to obtain a polyester-based elastomer precursor in a pellet shape.

In addition, during the melt polymerization, a branching agent may be further added to improve the melt viscosity and melt strength of the polyester-based elastomer.

The branching agent may include one or more selected from the group consisting of glycerol, pentaerythritol, trimellitic anhydride, trimellitic acid, trimethylol propane, and neopentyl glycol, preferably trimellitic anhydride.

Based on 100 parts by weight of the starting materials, the branching agent may be included in an amount of 0.05 to 0.1 % by weight. Within this range, the melting viscosity and degree of polymerization of the polyester-based elastomer are appropriate, so that the melt polymerization reaction may be easily controlled, and the polyester-based elastomer precursor may be easily discharged outside a reactor.

Step ( 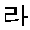 ) of preparing a polyester-based elastomer

Next, the polyester-based elastomer precursor may be solid-phase polymerized to produce a polyester-based elastomer.

The solid-phase polymerization may be performed by introducing the polyester-based elastomer precursor into a solid-phase polymerization reactor, and then gradually reducing the pressure to high vacuum under an inert atmosphere at 140 to 200 °C for 10 to 24 hours.

The solid-phase polymerization reactor may be a vessel vacuum dryer connected to a rotatable high vacuum pump, and the inert atmosphere may be a nitrogen atmosphere.

In addition, the polyester-based elastomer may be a commercially available material, preferably LG Chemical's KEYFLEX BT 1040D (DSC melting point: 198 °C, hardness Shore D: 40).

For example, based on 100 % by weight in total of all components constituting the polybutylene terephthalate resin composition, including the first polybutylene terephthalate, the second polybutylene terephthalate, the organometallic salt-based phosphinate flame retardant, the phosphate-based flame retardant, the polyester-based elastomer or ethylene-glycidyl (meth)acrylate copolymer, and the additive, the polyester-based elastomer may be included in an amount of 1 to 10 % by weight, as a preferred example, 2 to 10 % by weight, as a more preferred example, 3 to 9 % by weight. Within this range, impact resistance may be significantly improved without deteriorating the intrinsic mechanical properties of the resin.

### Ethylene-glycidyl (meth)acrylate copolymer

The ethylene-glycidyl (meth)acrylate copolymer of the present invention may be used for impact reinforcement of a resin composition.

The ethylene-glycidyl (meth)acrylate copolymer may be a polyethylene-based copolymer obtained by polymerizing glycidyl (meth)acrylate.

Based on 100 % by weight of all components constituting the ethylene-glycidyl (meth)acrylate copolymer, the glycidyl (meth)acrylate may be included in an amount of 3 % by weight or more, 3 to 10 % by weight, or 3 to 7 % by weight. In this case, impact reinforcement and elongation may be sufficiently increased.

The ethylene-glycidyl (meth)acrylate copolymer includes a compound represented by Chemical Formula 4 below. In this case, impact resistance may be excellent.

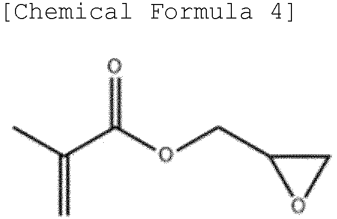

As shown in Chemical Formula 4, the ethylene-glycidyl (meth)acrylate copolymer may be obtained by copolymerizing an olefin monomer and a monomer containing an epoxy group.

For example, ethylene may be used as the olefin monomer. When necessary, an alkylene having 3 to 19 carbon atoms, propylene, isopropylene, butylene, isobutylene, octene, or combinations thereof may be used.

As the monomer containing an epoxy group, glycidyl (meth)acrylate, and the like may be used. Based on a total weight of all components constituting the corresponding copolymer, the glycidyl (meth)acrylate monomer may be used in an amount of 0.01 % by weight or more, 5 % by weight or more, 5 to 40 % by weight, 5 to 30 % by weight, or 10 to 25 % by weight.

Preferably, the glycidyl-modified olefin rubber polymer may be a compound represented by Chemical Formula 4 and a polyethylene-based copolymer grafted with glycidyl (meth)acrylate. In this case, impact strength may be excellent.

As a more preferred example, the glycidyl-modified olefin rubber polymer may be a copolymer obtained by polymerizing ethylene, glycidyl (meth)acrylate, and vinyl acetate. In this case, impact strength may be excellent.

For example, based on 100 % by weight in total of all components constituting the polybutylene terephthalate resin composition, including the first polybutylene terephthalate, the second polybutylene terephthalate, the organometallic salt-based phosphinate flame retardant, the phosphate-based flame retardant, the polyester-based elastomer or ethylene-glycidyl (meth)acrylate copolymer, and the additive, the glycidyl-modified olefin rubber polymer may be included in an amount of 1 to 10 % by weight, as a preferred example, 2 to 10 % by weight, as a more preferred example, 3 to 9 % by weight. Within this range, impact resistance may be significantly improved without deteriorating the intrinsic mechanical properties of the resin.

### Polybutylene terephthalate resin composition

The polybutylene terephthalate resin composition is preferably a polybutylene terephthalate resin composition for injection molding, and since the polybutylene terephthalate resin composition has excellent flame retardancy and elongation, phase separation does not occur during injection molding, so a product with a thin thickness or complex structure may be manufactured.

For example, when the content of the organometallic salt-based phosphinate flame retardant is a, the content of the phosphate-based flame retardant is b, and the content of the polyester-based elastomer or ethylene-glycidyl (meth)acrylate copolymer is c, the polybutylene terephthalate resin composition of the present invention may satisfy a>b>c. In this case, mechanical strength, processability, flame retardancy, and elongation may be significantly improved by affecting compatibility, dispersibility, and processability.

The weight ratio (a:b) of the organometallic salt-based phosphinate flame retardant to the phosphate-based flame retardant may be 7:2 to 7:4. In this case, mechanical strength, processability, flame retardancy, and elongation may be significantly improved by affecting compatibility, dispersibility, and processability.

The weight ratio (b:c) of the phosphate-based flame retardant to the polyester-based elastomer or ethylene-glycidyl (meth)acrylate copolymer may be 4:3 to 8:3. In this case, mechanical strength, processability, flame retardancy, and elongation may be significantly improved by affecting compatibility, dispersibility, and processability.

For example, according to the purpose, within the range that does not damage the properties of each component, the polybutylene terephthalate resin composition of the present invention may include one or more selected from the group consisting of a heat stabilizer, a flame retardant, a flame retardant auxiliary, an activator, a processing aid, a plasticizer, a coupling agent, a light stabilizer, a release agent, a dispersant, an anti-drip agent, a weather stabilizer, an antioxidant, a compatibilizer, a pigment, a dye, an antistatic agent, a wear resistance agent, a filler, and an antibacterial agent, preferably one or more selected from the group consisting of an antioxidant, a colorant, an activator, a release agent, a heat stabilizer, and a plasticizer. In this case, both impact strength and processability may be excellent without degrading mechanical properties.

Based on 100 % by weight in total of the polybutylene terephthalate; the organometallic salt-based phosphinate flame retardant; the phosphate-based flame retardant; the polyester-based elastomer or ethylene-glycidyl (meth)acrylate copolymer; and the additive, the additive may be included in an amount of 7 % by weight or less, as a specific example, 0.1 to 5 % by weight, preferably 0.1 to 3 % by weight, more preferably 0.2 to 0.8 % by weight.

For example, the antioxidant may be a known antioxidant blended in a polybutylene terephthalate resin composition.

The antioxidant includes phosphorus antioxidants and phenolic antioxidants.

The hindered phenolic antioxidant may include pentaerythritol-tetrakis[3-(3,5-di-t-butyl-4-hydroxyphenyl)propionate], thiodiethylene-bis[3-(3,5-di-t-butyl-4-hydroxyphenyl)propionate].

The phosphorus antioxidant may include bis (2,6-di-tert-butyl -4-methylphenyl)pentaerythritol-diphosphite or bis(2,4-dicumylphenyl)pentaerythritol diphosphite.

According to the present invention, it may be desirable to use two different types of the aforementioned antioxidants in combination. Specifically, heat resistance may be further improved by using a mixture of hindered phenolic antioxidant and phosphorus antioxidant.

For example, the weight ratio of the hindered phenolic antioxidant to the phosphorus antioxidant may be 1:0.1 to 1:1, preferably 1: 0.4 to 1:1, more preferably 1: 0.6 to 1:1. When mixed at the above weight ratio, heat resistance may be further improved without deterioration of the properties of the resin composition.

Based on 100 % by weight in total of a polybutylene terephthalate; an organometallic salt-based phosphinate flame retardant; a phosphate-based flame retardant; a polyester-based elastomer or ethylene-glycidyl (meth)acrylate copolymer; and an additive, the antioxidant may be included in an amount of 0.01 to 5 % by weight, preferably 0.01 to 3 % by weight. Within this range, heat resistance may be excellent.

For example, the anti-dripping agent may be a known anti-dripping agent blended in a polybutylene terephthalate resin composition.

As a specific example, when using at least one of tetrafluoroethylene, polyvinylidene fluoride, a tetrafluoroethylene/vinylidene fluoride copolymer, a tetrafluoroethylene/hexafluoropropylene copolymer, and an ethylene/tetrafluoroethylene copolymer, it is preferable because the flame retardant quality may be improved through the dripping prevention effect.

In one embodiment of the present invention, the anti-dripping agent may be a commercially available product.

Based on 100 % by weight in total of a lubricant, an antioxidant, and an anti-dripping agent, the anti-dripping agent may be included in an amount of 0.01 to 5 % by weight, 0.1 to 3 % by weight, 0.1 to 2 % by weight, 0.1 to 1 % by weight, or 0.2 to 0.8 % by weight in one or more of polybutylene terephthalate, the organometallic salt-based phosphinate flame retardant, the phosphate-based flame retardant, the polyester-based elastomer or ethylene-glycidyl (meth)acrylate copolymer. When the content of the anti-dripping agent is excessive beyond the range, a molding problem may occur in a molded article manufactured using a polyester resin composition containing the same, resulting in a deterioration in quality. Below the range, the anti-dropping effect may not be fully exerted.

For example, based on 100 % by weight in total of the polybutylene terephthalate; the organometallic salt-based phosphinate flame retardant; the phosphate-based flame retardant; the polyester-based elastomer or ethylene-glycidyl (meth)acrylate copolymer; and the additive, the colorant may be included in an amount of 0.01 to 5 % by weight, preferably 0.01 to 3 % by weight. Within this range, processability may be excellent.

For example, the colorant masterbatch may be a carbon colorant masterbatch. In this case, there is an effect of improving dispersibility without causing layer separation of the composition.

For example, the lubricant may be pentaerythritol tetrastearate. In this case, the wettability of the composition of the present invention may be improved, and at the same time, heat resistance and processability may be excellent.

For example, based on 100 % by weight in total of the polybutylene terephthalate; the organometallic salt-based phosphinate flame retardant; the phosphate-based flame retardant; the polyester-based elastomer or ethylene-glycidyl (meth)acrylate copolymer; and the additive, the lubricant may be included in an amount of 0.01 to 3 % by weight, preferably 0.01 to 2 % by weight. Within this range, the wettability of the polybutylene terephthalate composition may be improved, and mechanical properties may be excellent.

For example, the heat stabilizer may include one or more selected from the group consisting of tris (nonylphenyl) phosphite, tris(2,4-di-t-butylphenyl) phosphite (TBPP), 2,4,6-tri-tert-butylphenyl-2-butyl-2-ethyl-1,3-propanediol phosphite, diisodecyl pentaerythritol diphosphite, distearyl pentaerythritol diphosphite, bis(2,4-di-t-butylphenyl) pentaerythritol diphosphate (PEP24), bis(2,4-di-cumylphenyl) pentaerythritol diphosphate, and tetrakis(2,4-di-tertbutylphenyl) [1,1-biphenyl]-4,4'-diyl bisphosphonate.

For example, based on 100 % by weight in total of the polybutylene terephthalate; the organometallic salt-based phosphinate flame retardant; the phosphate-based flame retardant; the polyester-based elastomer or ethylene-glycidyl (meth)acrylate copolymer; and the additive, the heat stabilizer may be included in an amount of 0.01 to 2 % by weight, preferably 0.01 to 1 % by weight. Within this range, heat resistance may be excellent.

In the present invention, as the release agent, a release agent used in the related technical field may be used within a range that do not affect impact strength, processability, flame retardancy, and high molding shrinkage.

For example, based on 100 % by weight in total of the polybutylene terephthalate; the organometallic salt-based phosphinate flame retardant; the phosphate-based flame retardant; the polyester-based elastomer or ethylene-glycidyl (meth)acrylate copolymer; and the additive, the release agent may be included in an amount of 0.01 to 5 % by weight, preferably 0.01 to 3 % by weight. Within this range, releasability may be excellent.

In the present invention, as the plasticizer, a plasticizer used in the related technical field may be used within a range that do not affect impact strength, processability, flame retardancy, and high molding shrinkage.

For example, based on 100 % by weight in total of the polybutylene terephthalate; the organometallic salt-based phosphinate flame retardant; the phosphate-based flame retardant; the polyester-based elastomer or ethylene-glycidyl (meth)acrylate copolymer; and the additive, the plasticizer may be included in an amount of 0.01 to 5 % by weight, preferably 0.01 to 3 % by weight. Within this range, flame retardancy may be excellent.

The polybutylene terephthalate resin composition of the present invention may have an elongation of 22 % or more or 22 to 50% as measured at a rate of 50 mm/min according to ISO 527. Within this range, elongation may be excellent and durability may be improved.

The polybutylene terephthalate resin composition of the present invention may have an Izod impact strength (23 °C, notched) of 4.7 kJ/m² or more or 4.8 to 5.1 kJ/m² as measured using a 4 mm thick specimen according to ISO 180. Within this range, physical property balance may be improved.

The polybutylene terephthalate resin composition of the present invention may have a flame retardancy of V0 or higher as measured for a specimen size of 0.8 mm according to a UL94 method.

The polybutylene terephthalate resin composition of the present invention may have a fluidity of 9.2 g/10 min or more or 9.2 to 30 g/10 min as measured according to ISO1133.

Hereinafter, a method of preparing the polybutylene terephthalate resin composition of the present invention is described in detail.

### Method of preparing polybutylene terephthalate resin composition

When describing a method of preparing the polybutylene terephthalate resin composition of the present invention, all contents of the polybutylene terephthalate resin composition described above are included.

The method of preparing the polybutylene terephthalate resin composition of the present invention includes a step of adding a polybutylene terephthalate having an intrinsic viscosity (I.V) of greater than 1.1 and 1.5 or less, metal salt of diethylphosphinic acid, resorcinol phosphate ester, and a polyester-based elastomer or ethylene-glycidyl (meth)acrylate copolymer into an extruder and performing melt-kneading and extrusion. In this case, by satisfying the physical property balance, excellent mechanical strength, processability, flame retardancy, and elongation may be provided to electrical and electronic products or automotive parts with thin thickness or complex structure, and injection molding characteristics may be implemented.

The method of preparing the polybutylene terephthalate resin composition may include the above-described additives.

In the method of preparing the polybutylene terephthalate resin composition, kneading and extrusion may be performed via a single-screw extruder, a twin-screw extruder, or a Banbury mixer, preferably via a twin-screw extruder. In this case, the composition may be uniformly dispersed and compatibility may be excellent.

For example, the step of preparing pellets using an extrusion kneader may be performed at a barrel temperature of 210 to 290 °C, 230 to 270 °C, or 240 to 260 °C. In this case, the processing capacity per unit time may be appropriate, melt-kneading may be sufficiently performed, and thermal decomposition of the resin component may be prevented.

For example, the step of preparing pellets using an extrusion kneader may be performed at a screw rotation rate of 100 to 300 rpm/min, as a specific example, 150 to 300 rpm/min, as a preferred example, 200 to 300 rpm/min. In this case, the processing capacity per unit time may be appropriate, the process efficiency may be improved, and excessive cutting may be prevented.

Polybutylene terephthalate resin composition pellets may be used as is or after being dehumidified and dried with hot air.

For example, the dehumidifying drying may be performed in a hot air dryer at a temperature range of 80 to 100 °C for more than 3 hours.

For example, the pellets may be manufactured into an injection molded article using an injection molding machine at an injection barrel temperature of 210 to 300 °C, 220 to 290 °C, or 240 to 270 °C.

For example, the extruder may have 6 or more kneading blocks, preferably 7 or more kneading blocks, more preferably 8 or more kneading blocks, as a preferred example, 8 to 15 kneading blocks, as a more preferred example, 9 to 12 kneading blocks. In this case, it may be effective to arrange the kneading blocks in the order of forward kneading blocks, neutral kneading blocks, and backward kneading blocks with respect to a resin flow direction. Depending on combination manners, a continuous or separate block combination may be used. In this case, the dispersibility of the components and the compatibility of the composition are further improved, thereby providing a high-quality mixed substance.

The type of extruder is not particularly limited, but considering uniform mixing and dispersion, ease of processing, and economy, it may be desirable to use a twin-screw extruder with two screws.

The extruder consists of a feeder for supplying materials into a barrel, a screw for transporting and mixing the materials supplied into the barrel, and a die for extruding the mixed materials. The screw consists of multiple screw elements to provide various functions.

One or more feeders may be provided. Optionally, two or more feeders may be provided. For example, a main feeder and optionally an auxiliary feeder may be provided. Optionally, two or more auxiliary feeders may be provided.

For example, all components except the polyester-based elastomer or ethylene-glycidyl (meth)acrylate copolymer may be fed into the main inlet, and the polyester-based elastomer or ethylene-glycidyl (meth)acrylate copolymer may be fed into the auxiliary inlet 1.

As another example, all components except the polyester-based elastomer or ethylene-glycidyl (meth)acrylate copolymer and the flame retardant may be fed into the main inlet, the polyester-based elastomer or ethylene-glycidyl (meth)acrylate copolymer may be fed into the auxiliary inlet, and the flame retardant may be fed into the auxiliary inlet 2.

Hereinafter, a molded article including the polybutylene terephthalate resin composition of the present invention is described. In describing the molded article of the present invention, all of the contents of the polybutylene terephthalate resin composition described above are included.

### Molded article

The molded article of the present invention may include the polybutylene terephthalate resin composition. That is, the molded article of the present invention may be manufactured by extrusion-molding or injection-molding the aforementioned polybutylene terephthalate resin composition according to a method used in the art.

For example, the molded article may be obtained by kneading and extruding the polybutylene terephthalate resin composition. The kneading and extrusion may be performed using a conventional extruder, and as a preferred example, a single-screw extruder or a twin-screw extruder.

For example, the molded article may be an injection-molded electrical and electronic product or automotive interior part. In this case, by the polybutylene terephthalate resin composition of the present invention, it is possible to provide a high-quality molded article by satisfying all of heat resistance, processability, electrical properties, flame retardancy properties, and high injection molding characteristics required by the market.

The molded article may be manufactured by extrusion-molding the above-described polybutylene terephthalate resin composition. For example, a release extrusion molded article, a sheet by extrusion molding, or a film by extrusion molding may be manufactured by molding the polybutylene terephthalate resin composition. The various extrusion molding methods include the cold runner method, the hot runner method, injection compression molding, injection press molding, gas-assisted injection molding, foam molding (including by injection of supercritical fluid), insert molding, in-mold coating molding, insulating mold molding, rapid heating and cooling mold molding, two-color molding, sandwich molding, and ultra-high-speed injection molding.

Therefore, the polybutylene terephthalate resin composition according to the present invention may be applied to various automobile electric/electronic equipment materials fields, including connectors, sensors, and parking brake systems, which particularly require the physical properties thereof.

In describing the polybutylene terephthalate resin composition of the present invention, the method of preparing the same, and the molded article including the same, it should be noted that other conditions or equipment not explicitly described herein may be appropriately selected within the range commonly practiced in the art without particular limitation.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### [Examples]

### Examples 1 to 5, and Comparative Examples 1 to 10

The raw materials used in examples and comparative examples are as follows.
(A) Polybutylene terephthalate
(A-1) Intrinsic viscosity(IV) 1.2, Jangchun Co., product name: PBT 1100-211S
(A-2) Intrinsic viscosity(IV) 1.0, Tunhe Co., product name: TH6098A
(A-3) Intrinsic viscosity(IV) 0.8, Tunhe Co., product name: TH6082A
(B) Organometallic salt-based phosphinate flame retardant: Clariant Co., Exolit^{®} OP 1240 (material represented by Chemical Formula 1-1 below) 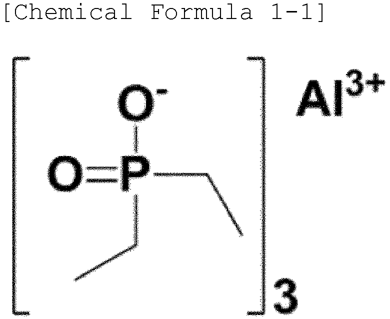
(C) Phosphate-based flame retardant: Resorcinol bis(2,6-dimethylphenyl)phosphate (PX200, Japanese die Hachi Co.), phosphorus content: 8.7 % by weight
(D-1) Polyester-based elastomer: Keyflex BT 1040D (LG Chemical Co.) having a hardness of 40 D composed of terephthalate as an aromatic dicarboxylic acid, 1,4-butanediol as an aliphatic diol, and polyoxytetramethylene glycol as an aliphatic polyether compound
(D-2) Ethylene-glycidyl (meth)acrylate copolymer: DuPont Co., product name: Elvaloy PTW (GMA content: 5 % by weight)
(D-3) Melamine cyanurate
(D-4) Melamine polyphosphate
(E) Additives
E-1) Lubricant: Lione Chemtec Co., LC102N (PE-based)
E-2) Antioxidant: Songnox 6260
E-3) Anti-dripping agent: Teflon JF-4A

The raw materials of the polybutylene terephthalate resin composition described in Tables 1 and 2 below were mixed, and then the polybutylene terephthalate resin composition having a uniform dispersion was prepared in the form of pellets through extrusion. Then, the pellets were heated, injected into a mold, and then cooled to produce specimens through an injection molding process.

Specifically, each component shown in Tables 1 and 2 below was mixed in a mixer, and then fed into a main inlet at a feed rate of 50 kg/h at 250 rpm using a twin-screw extruder (φ40, L/D: 42, SM Platek equipment) set to 250 °C, and extruded to obtain pellets of the polybutylene terephthalate resin composition. At this time, glass fiber was fed through an auxiliary inlet, and nine mixing blocks of the extruder were used.

The pellets were dried in a convection oven at 120 °C for more than 4 hours and then injected using an injection molding machine (ENGEL, 80 tons) at an injection temperature of 250 °C, a mold temperature of 60 °C, and an injection speed of 30 mm/sec to produce specimens.

**[Table 1]**

| Classification | Example 1 | Example 2 | Example 3 | Example 4 | Example 5 |
|---|---|---|---|---|---|
| A - 1 | 73.3 | 75.3 | 77.7 | 51.4 | 51.4 |
| A - 2 | - | - | - | 25.9 | 25.9 |
| B | 14 | 14 | 14 | 14 | 14 |
| C | 8 | 6 | 4 | 4 | 4 |
| D - 1 | 3 | 3 | 3 | 3 | - |
| D - 2 | - | - | - | - | 3 |

In Table 1, each of the raw materials is added to A-1 ~ D-2 in a unit of % by weight based on 100 % by weight in sum of 0.8 % by weight of the lubricant of E-1), 0.4 % by weight of the antioxidant of E-2), and 0.5 % by weight of the anti-dripping agent of E-3).

**[Table 2]**

| Classification | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|
| A - 1 | 76.3 | 76.3 | 76.3 | 76.3 | 51.4 | 71.3 | 77.3 | 69.3 | 79.3 | 77.8 |
| A - 2 | - | - | - | - | - | - | - | - | - | - |
| A - 3 | - | - | - | - | 25.9 | - | - | - | - | - |
| B | 14 | 14 | 14 | 14 | 14 | 20 | 10 | 14 | 14 | 14 |
| C | - | - | 4 | 8 | 4 | 4 | 8 | 12 | 2 | 4 |
| D - 1 | - | - | - | - | 3 | 3 | 3 | 3 | 3 | 3 |
| D - 2 | - | - | - | - | - | - | - | - | - | - |
| D - 3 | 8 | - | - | - | - | - | - | - | - | - |
| D - 4 | - | 8 | 4 | - | - | - | - | - | - | - |

In Table 2, each of the raw materials is added to A-1 ~ D-4 in a unit of % by weight based on 100 % by weight in sum of 0.8 % by weight of the lubricant of E-1), 0.4 % by weight of the antioxidant of E-2), and 0.5 % by weight of the anti-dripping agent of E-3). In Comparative Example 10, each of the raw materials is added to A-1 ~ D-4 based on 100 % by weight in sum of 0.8 % by weight of the lubricant of E-1) and 0.4 % by weight of the antioxidant of E-2).

### Test Example 1: Evaluation of physical properties of molded article specimens

The properties of the molded article specimens manufactured from Examples 1 to 5 and Comparative Examples 1 to 10 were evaluated. The evaluation criteria are as follows.
- Tensile strength (MPa): Tensile strength was measured at a rate of 50 mm/min according to ISO 527.
- Elongation (%): Elongation was measured at a rate of 50 mm/min according to ISO 527.
- Flexural strength (MPa): Flexural strength was measured at a rate of 2 mm/min according to ISO 178.
- Impact strength (IZOD): Impact strength was measured for a 4 mm thick specimen according to ISO 180 (Notched, 23 °C).
- Flame retardancy: Flame retardancy was measured for a specimen size of 0.8 mm according to UL94.

The results measured by the evaluation criteria are as shown in Tables 3 and 4 below.

**[Table 3]**

| Classification | Example 1 | Example 2 | Example 3 | Example 4 | Example 5 |
|---|---|---|---|---|---|
| Tensile strength (MPa) | 33 | 37 | 39 | 38 | 39 |
| Elongation (%) | 42.5 | 26.7 | 29.4 | 27.5 | 25.7 |
| Flexural strength (MPa) | 53 | 64 | 64 | 67 | 65 |
| Impact strength (kJ/m²) | 4.8 | 5.1 | 5.1 | 5.1 | 4.8 |
| Flame retardancy | V0 | V0 | V0 | V0 | V0 |

**[Table 4]**

| Classification | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|
| Tensile strength (MPa) | 47 | 49 | 48 | 41 | 40 | 45 | 43 | 30 | 44 | 39 |
| Elongation (%) | 1.7 | 2.5 | 5.2 | 19 | 19.7 | 2.2 | 23 | 42.1 | 21.1 | 28.1 |
| Flexural strength (MPa) | 77 | 79 | 78 | 68 | 68 | 72 | 71 | 48 | 72 | 64 |
| Impact strength (kJ/m²) | 2.6 | 2.7 | 2.7 | 3.2 | 4.9 | 2.6 | 5.2 | 4.2 | 5.4 | 4.9 |
| Flame retardancy | V0 | V1 | V1 | V0 | V0 | V0 | V1 | V0 | V0 | Not measured |

As shown in Tables 3 and 4, since the polybutylene terephthalate resin compositions of Examples 1 to 5 according to the present invention include the polybutylene terephthalate, the organometallic salt-based phosphinate flame retardant, the phosphate-based flame retardant, and the polyester-based elastomer or ethylene-glycidyl (meth)acrylate copolymer in a predetermined mixing ratio, mechanical strength, processability, and flame retardancy are maintained or improved, and elongation is greatly improved, thereby providing product reliability as a part for automobile electric/electronic equipment. On the other hand, in the case of Comparative Example 1 in which the phosphate-based flame retardant is not included and melamine cyanurate is used, compared to Example 1, elongation and impact strength are significantly reduced, making it difficult to provide product reliability as a part for automobile electric/electronic equipment.

In addition, in the case of Comparative Examples 2 and 3 in which the phosphate-based flame retardant is not included and melamine polyphosphate is used, compared to Example 1, elongation and impact strength are significantly reduced, making it difficult to provide product reliability as a part for automobile electric/electronic equipment.

In addition, in the case of Comparative Example 4 in which both polyester-based elastomer and ethylene-glycidyl (meth)acrylate copolymer are not included, compared to Example 1, elongation and impact strength are significantly reduced, and processability is poor, making it difficult to provide product reliability as a part for automobile electric/electronic equipment.

In addition, in the case of Comparative Example 5 in which the intrinsic viscosity of unreinforced polybutylene terephthalate is inadequate, compared to Example 1, processability is excellent, but elongation is reduced. Thus, Comparative Example 5 is not suitable as a part.

In addition, in the case of Comparative Example 6 in which an excess of the organometallic salt-based phosphinate flame retardant is used, compared to Example 1, elongation and impact strength are significantly reduced, showing poor results.

In addition, in the case of Comparative Example 7 in which the organometallic salt-based phosphinate flame retardant is used in a small amount, compared to Example 1, flame retardancy is reduced, showing poor results for application to a part.

In addition, in the case of Comparative Example 8 in which an excess of the phosphate-based flame retardant is used, compared to Example 1, tensile strength and flexural strength are reduced, and processability is poor.

In addition, in the case of Comparative Example 9 in which the phosphate-based flame retardant is used in a small amount, compared to Example 1, elongation is reduced, making it difficult to provide product reliability.

In addition, in the case of Comparative Example 10 in which the anti-dripping agent is not included, compared to Example 3, flame retardancy is poor.

That is, the polybutylene terephthalate resin composition according to one embodiment of the present invention includes one of an organometallic salt-based phosphinate flame retardant, a phosphate-based flame retardant, a polyester-based elastomer or ethylene-glycidyl (meth)acrylate copolymer while including polybutylene terephthalate in a high content. Thus, the mechanical properties, processability, flame retardancy, and elongation of a molded article manufactured using the polybutylene terephthalate resin composition are improved, and thus the molded article may be suitable for a part for automobile electric/electronic equipment.

## Claims

1. A polybutylene terephthalate resin composition, comprising 100 parts by weight of a polybutylene terephthalate; 1 to 30 parts by weight of an organometallic salt-based phosphinate flame retardant; 1 to 30 parts by weight of a phosphate-based flame retardant; and 1 to 30 parts by weight of a polyester-based elastomer or ethylene-glycidyl (meth)acrylate copolymer,
wherein, when a content of the organometallic salt-based phosphinate flame retardant is a, a content of the phosphate-based flame retardant is b, and a content of the polyester-based elastomer or ethylene-glycidyl (meth)acrylate copolymer is c, a>b>c is satisfied;
a weight ratio (a:b) of the organometallic salt-based phosphinate flame retardant to the phosphate-based flame retardant is 7:2 to 7:4; and
a weight ratio (b:c) of the phosphate-based flame retardant to the polyester-based elastomer or ethylene-glycidyl (meth)acrylate copolymer is 4:3 to 8:3.

2. The polybutylene terephthalate resin composition according to claim 1, wherein the polybutylene terephthalate comprises a polybutylene terephthalate having an intrinsic viscosity (I.V) of greater than 1.1 and 1.5 or less and a polybutylene terephthalate having an intrinsic viscosity (I.V) of greater than 0.8 and 1.1 or less in a weight ratio of 1:0 to 1:1.

3. The polybutylene terephthalate resin composition according to claim 1, wherein the organometallic salt-based phosphinate flame retardant has a structure represented by Chemical Formula 1 below. 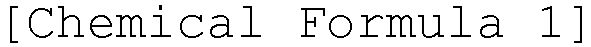 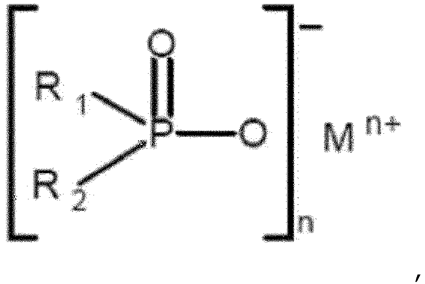 wherein R1 and R2 are each an alkyl group or aryl group having 1 to 6 carbon atoms, M comprises one or more selected from the group consisting of Mg, Ca, Al, Sb, Sn, Ge, Ti, Fe, Zr, Ce, Bi, Sr, Mn, Li, Na, K, and a protonated nitrogen base, and n is 1 to 4.

4. The polybutylene terephthalate resin composition according to claim 1, wherein the phosphate-based flame retardant has a structure represented by Chemical Formula 2 below. 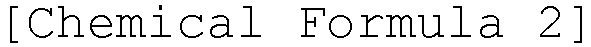 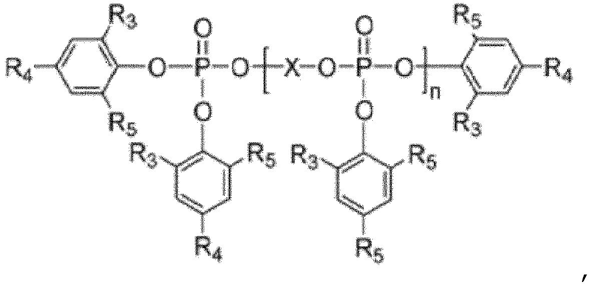 wherein R3, R4, and R5 are each independently hydrogen or a C1-C4 alkyl group, X is a C6-C20 aryl group or a C6-C20 arylene group substituted with a C1-C4 alkyl group, and n is an integer from 0 to 4.

5. The polybutylene terephthalate resin composition according to claim 1, wherein the polyester-based elastomer is a compound composed of terephthalate as an aromatic dicarboxylic acid, 1,4-butanediol as an aliphatic diol, and polyoxytetramethylene glycol as an aliphatic polyether compound.

6. The polybutylene terephthalate resin composition according to claim 1, wherein the ethylene-glycidyl (meth)acrylate copolymer is obtained by copolymerizing an olefin monomer and a monomer containing an epoxy group.

7. A polybutylene terephthalate resin composition, comprising, based on 100 % by weight in total of a polybutylene terephthalate; an organometallic salt-based phosphinate flame retardant; a phosphate-based flame retardant; a polyester-based elastomer or ethylene-glycidyl (meth)acrylate copolymer; and an additive,
30 to 85 % by weight of a polybutylene terephthalate having an intrinsic viscosity (I.V) of greater than 1.1 and 1.5 or less,
0 to 40 % by weight of a polybutylene terephthalate having an intrinsic viscosity (I.V) of greater than 0.8 and 1.1 or less,
10 to 20 % by weight of the organometallic salt-based phosphinate flame retardant,
1 to 10 % by weight of the phosphate-based flame retardant, and
1 to 5 % by weight of the polyester-based elastomer or ethylene-glycidyl (meth)acrylate copolymer.

8. The polybutylene terephthalate resin composition according to claim 7, wherein the additive comprises one or more selected from the group consisting of a heat stabilizer, a flame retardant, a flame retardant auxiliary, an activator, a processing aid, a plasticizer, a coupling agent, a light stabilizer, a release agent, a dispersant, an anti-drip agent, a weather stabilizer, an antioxidant, a compatibilizer, a pigment, a dye, an antistatic agent, a wear resistance agent, a filler, and an antibacterial agent.

9. The polybutylene terephthalate resin composition according to claim 1 or 7, wherein the polybutylene terephthalate resin composition is a material used in parts for automobile electric/electronic equipment.

10. The polybutylene terephthalate resin composition according to claim 1, wherein the polybutylene terephthalate resin composition has an elongation of 22 % or more as measured at a rate of 50 mm/min according to ISO 527,
an Izod impact strength (23 °C, notched) of 4.7 kJ/m² or more as measured using a 4 mm thick specimen according to ISO 180, and
a flame retardancy of V0 or higher as measured for a specimen size of 0.8 mm according to a UL94 method.

11. A method of preparing a polybutylene terephthalate resin composition, comprising adding, based on 100 % by weight in total of a polybutylene terephthalate; an organometallic salt-based phosphinate flame retardant; a phosphate-based flame retardant; a polyester-based elastomer or ethylene-glycidyl (meth) acrylate copolymer; and an additive, 30 to 85 % by weight of a polybutylene terephthalate having an intrinsic viscosity (I.V) of greater than 1.1 and 1.5 or less, 0 to 40 % by weight of a polybutylene terephthalate having an intrinsic viscosity (I.V) of greater than 0.8 and 1.1 or less, 10 to 20 % by weight of the organometallic salt-based phosphinate flame retardant, 1 to 10 % by weight of the phosphate-based flame retardant, and 1 to 5 % by weight of the polyester-based elastomer or ethylene-glycidyl (meth)acrylate copolymer into an extruder and performing melt-kneading and extrusion,
wherein, when a content of the organometallic salt-based phosphinate flame retardant is a, a content of the phosphate-based flame retardant is b, and a content of the polyester-based elastomer or ethylene-glycidyl (meth)acrylate copolymer is c, a>b>c is satisfied;
a weight ratio (a:b) of the organometallic salt-based phosphinate flame retardant to the phosphate-based flame retardant is 7:2 to 7:4; and
a weight ratio (b:c) of the phosphate-based flame retardant to the polyester-based elastomer or ethylene-glycidyl (meth)acrylate copolymer is 4:3 to 8:3.

12. A molded article, comprising the polybutylene terephthalate resin composition according to any one of claims 1 to 10.

13. The molded article according to claim 12, wherein the molded article is a part for automobile electric/electronic equipment.
